# EUROPÄISCHE PATENTSCHRIFT

(11) **EP 3 219 446 B1**
(45) Veröffentlichungstag und Bekanntmachung des Hinweises auf die Patenterteilung: **09.01.2019**
(21) Anmeldenummer: 17000372.7
(22) Anmeldetag: 07.03.2017
(51) Int. Cl.: B25F 5/00

(54) **HANDGEFÜHRTES ARBEITSGERÄT MIT EINEM ELEKTROMOTOR**
HAND-GUIDED APPLIANCE WITH AN ELECTRIC MOTOR
APPAREIL DE TRAVAIL MANUEL COMPRENANT UN MOTEUR ÉLECTRIQUE

(30) Priorität: 16.03.2016 DE 102016003150
(43) Veröffentlichungstag der Anmeldung: 20.09.2017
(73) Patentinhaber: Andreas Stihl AG & Co. KG, 71336 Waiblingen (DE)
(72) Erfinder: Gurr, Kay-Steffen, D-74078 Heilbronn (DE); Liebhard, Gernot, D-71332 Waiblingen (DE); Müller, Matthias, D-73614 Schorndorf (DE); Kolb, Joachim, D-71638 Ludwigsburg (DE)
(74) Vertreter: Wasmuth, Rolf

(56) Entgegenhaltungen:
- EP-A1- 1 903 588
- EP-A2- 2 524 773
- EP-A2- 2 929 986
- US-B1- 6 749 028

## Beschreibung

Die Erfindung betrifft ein handgeführtes Arbeitsgerät mit einem Elektromotor zum Antrieb eines Werkzeugs. Es sind elektrische Kontakte zur elektrischen Verbindung mit einem Akkupack vorgesehen, wobei ein elektrischer Betriebsschalter zur Inbetriebnahme des Elektromotors angeordnet ist. Der Betriebsschalter ist mit einem Betätigungsglied gekoppelt, welches vom Benutzer am Arbeitsgerät zu betätigen ist. Mittels einer Steuereinheit wird der Elektromotor nach Schließen des Betriebsschalters in Betrieb genommen.

Der Betriebsschalter eines akkubetriebenen Arbeitsgerätes ist meist an oder nahe einem manuellen Betätigungsglied des Arbeitsgerätes angeordnet ist. Der Betriebsschalter ist an seinem Einbauort über elektrische Leitungen sowohl mit dem Leistungsanschluss des Akkupacks als auch mit der Steuereinheit zur Inbetriebnahme des Elektromotors verbunden. Die Verbindung der elektrischen Leitungen mit dem Betriebsschalter, dem Akkupack und der Steuereinheit erfolgt meist über Kabelschuhe, die im Laufe der Betriebszeit korrodieren können und Quelle von elektrischen Fehlern sind.

Aus der EP 1 903 588 A1 ist ein Funktionsmodul für ein Akkuwerkzeug bekannt, bei welchem das Modulgehäuse einen Betriebsschalter hält. Das Modulgehäuse weist ferner Anschlussleitungen zur Verbindung mit einem Akkupack sowie Anschlussleitungen zur elektrischen Verbindung mit einem Elektromotor auf.

Die EP 2 524 773 A2 zeigt ein Funktionsmodul für ein elektrisches Arbeitswerkzeug, aus dessen Modulgehäuse elektrische Kontaktzungen herausragen, die zum Anschluss von Leitungen zum elektrischen Anschluss des Elektromotors einerseits und einer Spannungsquelle andererseits vorgesehen sind.

Der Erfindung liegt die Aufgabe zugrunde, ein handgeführtes Arbeitsgerät mit einem Akkupack, einem Betriebsschalter und einem Elektromotor zum Antrieb eines Werkzeugs derart auszubilden, dass die mit einer elektrischen Verdrahtung möglichen Fehlerquellen minimiert sind.

Die Aufgabe wird erfindungsgemäß nach den Merkmalen der Ansprüche 1 und 12 gelöst. Die elektrischen Kontakte, die Steuereinheit und der Betriebsschalter sind an einem gemeinsamen Träger gehalten, wobei der Träger eine dem Akkupack zugewandte erste Seite und zumindest eine dem Akkupack abgewandte zweite Seite aufweist. Die elektrischen Kontakte sind auf der ersten Seite des Trägers vorgesehen, während der Betriebsschalter auf der zweiten Seite des Trägers gehalten ist.

Nach der Erfindung wird somit ein Funktionsmodul zur Inbetriebnahme eines Elektromotors in einem akkubetriebenen handgeführten Arbeitsgerät geschaffen, welches alle notwendigen elektrischen Elemente zum Betrieb eines akkubetriebenen Arbeitsgerätes aufweist. Alle elektrischen Elemente liegen eng benachbart beieinander. Der Aufwand der elektrischen Verdrahtung kann auf ein Minimum gesenkt werden, so dass mögliche Fehlerquellen der elektrischen Verdrahtung minimiert sind.

Vorzugsweise ist der Träger von einer Platine gebildet, welche die Steuereinheit trägt und welche die elektrischen Verbindungen zwischen dem Akkupack, der Steuereinheit und dem Betriebsschalter als Leiterbahnen auf der Platine aufweist. Die elektrischen Bauelemente wie Betriebsschalter, Steuereinheit und Verbindungskontakte zum Akkupack können auf der Platine auf- bzw. eingelötet werden, so dass lösbare Kontakte wie Kabelschuhe vermieden sind. Die Ausführung der notwendigen elektrischen Verdrahtung als Leiterbahnen auf der Trägerplatine minimiert den Aufwand von elektrischen Kabeln.

Bevorzugt weist die Platine eine dem Akkupack zugewandte erste Platinenseite und eine dem Akkupack abgewandte zweite Platinenseite auf. Beide Platinenseiten können zur Bestückung mit elektronischen Bauelementen vorgesehen sein. Die den Träger bildende Platine ist zweckmäßig eine auf beiden Platinenseiten bestückte Platine.

Die elektrischen Kontakte zur Verbindung mit dem Akkupack sind vorzugsweise auf der ersten Platinenseite angeordnet, insbesondere auf der Platine mit Leiterbahnen verlötet. Der Betriebsschalter ist auf der zweiten Platinenseite vorgesehen und mit Leiterbahnen auf der Platine verlötet. Der Akkupack kann unmittelbar auf die Kontakte des im Gehäuse des Arbeitsgerätes gehaltenen Funktionsmoduls aufgesteckt werden, wobei die Steckverbindungen mit dem Akkupack vorteilhaft die einzigen Steckverbindungen der elektrischen Verdrahtung sind.

Es kann vorteilhaft sein, die Steuereinheit auf einer Steuerungsplatine vorzusehen, die als weitere Platine ausgebildet ist. Die weitere Platine kann auf der den Träger bildenden Platine gehalten sein. In zweckmäßiger Ausgestaltung ist die Steuerungsplatine für die Steuereinheit und die den Träger bildende Platine einteilig ausgeführt und bilden eine gemeinsame Platine.

In Weiterbildung der Erfindung ist der Elektromotor mit einem elektrischen Bremskreis ausgebildet, wobei der Bremskreis einen Bremswiderstand und einen elektrischen Bremsschalter umfasst. Der Bremsschalter ist - wie der Betriebsschalter - auf der zweiten Seite des Trägers gehalten. Vorteilhaft liegen der Betriebsschalter und der Bremsschalter unmittelbar benachbart nebeneinander.

Der Bremswiderstand ist vorteilhaft als elektrisches Bauelement auf der den Träger bildenden Platine angeordnet. Insbesondere ist der Bremswiderstand als Leiterbahn auf zumindest einer Platinenseite der den Träger bildenden Platine ausgebildet. Dabei werden vorteilhaft die Leitungen des elektrischen Bremskreises als Leiterbahnen auf der den Träger bildenden Platine ausgebildet. Somit wird ein Bremskreis geschaffen, der - insbesondere mit allen Bauelementen und der Verdrahtung - auf der Trägerplatine vorgesehen ist. Steckbare Kontakte für den Bremskreis sind minimiert.

Die elektrischen Kontakte des Funktionsmoduls zur Verbindung mit dem Akkupack sind erfindungsgemäß als lösbare Steckverbindung ausgebildet. Die den Träger bildende Platine ist in einer Aufnahme gehalten, die z. B. als Aufnahmewanne ausgebildet sein kann. Die elektrischen Kontakte durchragen den Boden der Aufnahme. Zweckmäßig ist die Trägerplatine in der Aufnahme vergossen.

Das elektromechanische Funktionsmodul zur Inbetriebnahme eines Elektromotors in einem akkubetriebenen, handgeführten Arbeitsgerät umfasst elektrische Kontakte zur elektrischen Verbindung mit einem Akkupack. Das Funktionsmodul umfasst ferner einen Betriebsschalter und eine Steuereinheit zur Inbetriebnahme des Elektromotors. Der Betriebsschalter ist mit einem mechanischen Betätigungsglied gekoppelt, wobei die elektrischen Kontakte, die Steuereinheit und der Betriebsschalter an einem gemeinsamen Träger gehalten sind. Der Träger weist eine erste Seite auf, auf der die elektrischen Kontakte vorgesehen sind und eine zweite Seite, auf der der Betriebsschalter angeordnet ist.

In besonderer Ausgestaltung der Erfindung wird der Träger von einer Platine gebildet, wobei die Platine die Steuereinheit trägt und die elektrischen Verbindungen zwischen den elektrischen Kontakten und dem Betriebsschalter als Leiterbahnen auf der Platine ausgebildet sind. Die elektrischen Kontakte zum Akkupack und zum Elektromotor sind lösbare Kontakte, während alle anderen Verbindungen des Funktionsmoduls als feste Lötverbindungen der Platine gestaltet sind.

Auf der den Betriebsschalter aufweisenden zweiten Seite des Trägers ist in Weiterbildung der Erfindung ein elektromechanischer Bremsschalter eines elektrischen Bremskreises für den Elektromotor angeordnet. Hierbei ist zweckmäßig ein Bremswiderstand auf der Platine vorgesehen, der insbesondere als Leiterbahn auf der Platine ausgebildet ist. Vorteilhaft sind auch die Leitungen des elektrischen Bremskreises als Leiterbahnen auf der den Träger bildenden Platine gestaltet.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Seitenansicht ein tragbares, elektrisches Arbeitsgerät mit einem Akkupack,
- Fig. 2: eine schematische Darstellung eines elektromechanischen Funktions-moduls zur Kontaktierung mit dem Akkupack nach Fig. 1,
- Fig. 3: eine isometrische Ansicht auf das Funktionsmodul nach Fig. 2,
- Fig. 4: einen Schnitt durch das Funktionsmodul längs der Linie IV-IV in Fig. 2,
- Fig. 5: eine Ansicht auf das Funktionsmodul gemäß Fig. 3 mit einem Betriebsschalter und einem Bremsschalter.

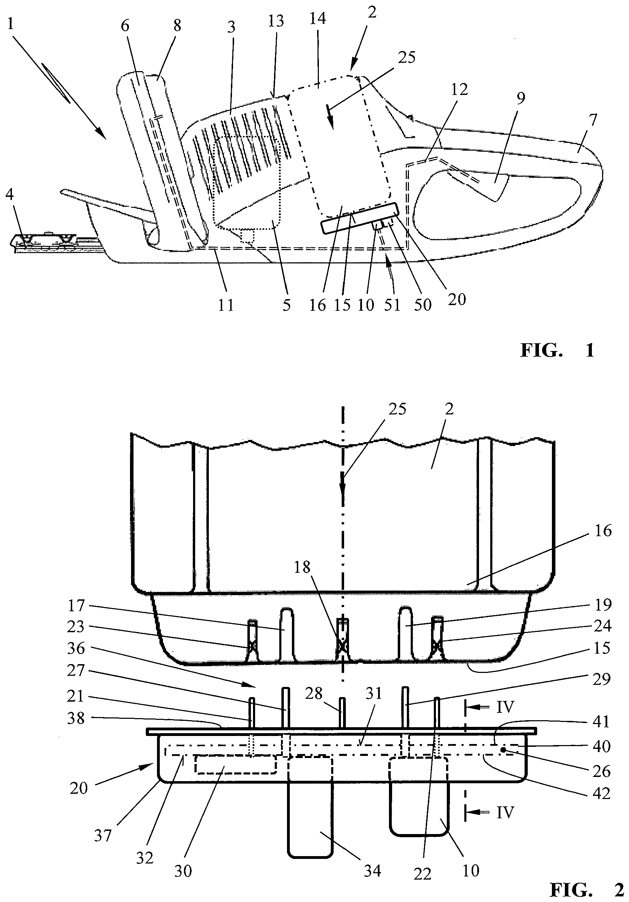

In Fig. 1 ist schematisch ein tragbares, handgeführtes Arbeitsgerät 1 gezeigt, welches im Ausführungsbeispiel als Heckenschere dargestellt ist. Das Arbeitsgerät 1 ist ein akkubetriebenes elektrisches Arbeitsgerät 1, wobei ein Akkupack 2 in das Gehäuse 3 des Arbeitsgerätes 1 eingeschoben ist. Das Werkzeug 4 des Arbeitsgerätes 1 wird von einem Elektromotor 5 angetrieben, der in Fig. 1 strichliert dargestellt ist.

Das Arbeitsgerät 1 weist einen vorderen Handgriff 6 und einen hinteren Handgriff 7 auf. Im gezeigten Ausführungsbeispiel ist im hinteren Handgriff 7 ein Betätigungsglied 9 für einen elektrischen Betriebsschalter 10 vorgesehen. Entsprechend ist im vorderen Handgriff 6 ein Betätigungsglied 8 vorgesehen, welches vorteilhaft ebenfalls auf den Betriebsschalter 10 wirkt. Zweckmäßig wirken die Betätigungsglieder 8 und 9 nach dem Prinzip einer sogenannten Zweihandschaltung auf den Betriebsschalter 10; die Wirkverbindungen 11 und 12 zwischen den Betätigungsgliedern 8 und 9 und dem Betriebsschalter 10 sind in Fig. 1 schematisch strichliert dargestellt.

Das dargestellte Arbeitsgerät kann beispielsweise auch als akkubetriebenes Blasgerät, akkubetriebener Freischneider, akkubetriebene Heckenschere oder dgl. akkubetriebenes Arbeitsgerät ausgeführt sein.

Wie sich aus Fig. 1 weiter ergibt, liegt der Akkupack 2 mit einem ersten Ende 16 innerhalb des Gehäuses 3, während das zweite Ende 14 des Akkupacks 2 etwa auf einer Ebene mit der Gehäuseoberseite 13 liegt.

Der eingeschobene Akkupack 2, insbesondere das erste Ende 16 des Akkupacks 2, weist eine Kontaktseite 15 auf, die einem Funktionsmodul 20 zugewandt liegt. Das Funktionsmodul 20 weist als Leistungskontakte elektrische Kontakte 21, 22 zur elektrischen Verbindung mit dem Akkupack 2 auf; den elektrischen Kontakten 21 und 22 sind Kontaktbuchsen 23 und 24 zugeordnet. Die elektrischen Kontakte 21/22 bilden zusammen mit den Kontaktbuchsen 23/24 die Leistungsverbindung zwischen dem Akkupack 2 und dem Funktionsmodul 20.

Das Funktionsmodul 20 weist ferner Positionierelemente 27, 29 auf, denen Positionieraufnahmen 17, 19 auf der Kontaktseite 15 des Akkupacks 2 zugeordnet sind. Ferner ist zumindest ein Kommunikationskontakt 28 an dem Funktionsmodul 20 vorgesehen; dem Kommunikationskontakt 28 liegt eine entsprechende Kontaktbuchse 18 in der Kontaktseite 15 des Akkupacks 2 gegenüber. Die Leistungskontakte 21, 22 bilden mit den Kontaktbuchsen 23, 24 ebenso eine Steckverbindung 36 wie der Kommunikationskontakt 28 mit der ihm zugeordneten Kontaktbuchse 18. Mit Einschieben des Akkupacks 2 in Pfeilrichtung 25 in den Geräteschacht des Gehäuses 3 werden einerseits die elektrischen Leistungskontakte 21, 22 in die Kontaktbuchsen 23, 24 und andererseits der Kommunikationskontakt 28 in die entsprechende Kontaktbuchse 18 eingeführt und stellen eine elektrische Verbindung zu dem Funktionsmodul 20 her. Zur sicheren Ausrichtung der Kontaktbuchsen 18, 23 und 24 zu den Leistungskontakten 21, 22 und dem Kommunikationskontakt 28 sind die Positionierelemente 27, 29 vorgesehen, denen die Positionieraufnahmen 17, 19 zugeordnet sind. Wie Fig. 2 zeigt, sind die Positionierelemente 27, 29 länger ausgeführt als die Leistungskontakte 21, 22 bzw. der Kommunikationskontakt 28, so dass die Positionierelemente 25 als erstes mit der Kontaktseite 15 des Akkupacks 2 in Eingriff treten.

Das Funktionsmodul 20 weist die elektrischen Kontakte 21, 22 zur Leistungsübertragung, den Kommunikationskontakt 28 und zweckmäßig die Positionierelemente 27, 29 auf. Das Funktionsmodul 20 umfasst ferner einen Betriebsschalter 10 sowie eine Steuereinheit 30 zur Inbetriebnahme und zum Betrieb des Elektromotors 5.

Wie insbesondere Fig. 2 zeigt, sind die elektrischen Kontakte 21, 22, der Kommunikationskontakt 28, die Steuereinheit 30 und der Betriebsschalter 10 an einem gemeinsamen Träger 40 gehalten. Der Träger 40 weist eine dem Akkupack 2 zugewandte erste Seite 41 auf, die auch als Frontseite des Trägers 40 bezeichnet werden kann. Der Akkupack 2 weist ferner eine dem Akkupack 2 abgewandte zweite Seite 42 auf, die auch als Rückseite des Trägers 40 bezeichnet werden kann.

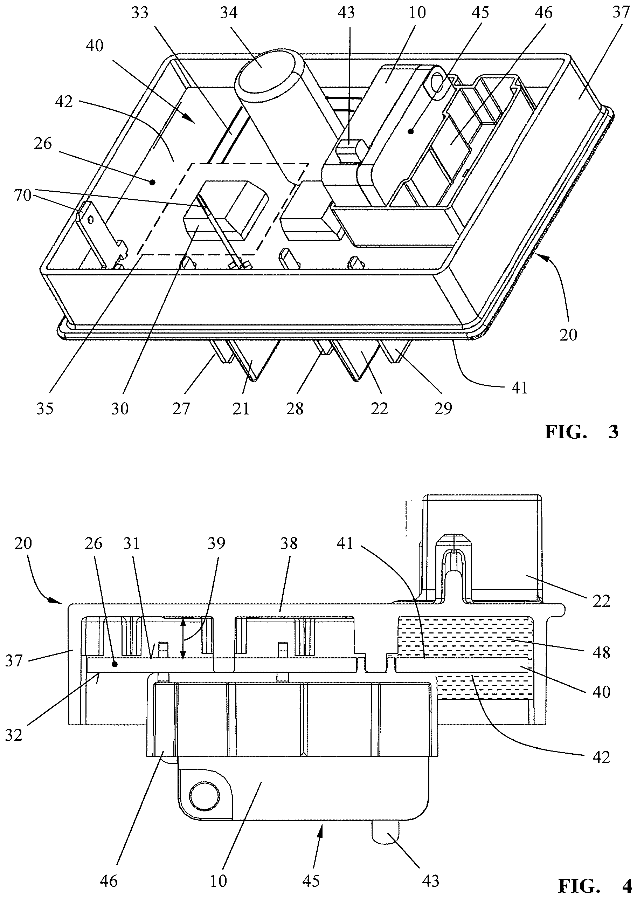

Wie auch Fig. 3 zeigt, ist der Träger 40 vorteilhaft von einer Platine 26 gebildet. Die Platine 26 trägt die Steuereinheit 30, wobei die elektrischen Verbindungen zwischen dem Akkupack 2, der Steuereinheit 30 und dem Betriebsschalter 10 als Leiterbahnen 33 auf der Platine 26 ausgebildet sind.

Die den Träger 40 bildende Platine 26 kann eine beidseitig bestückte Platine sein. Eine dem Akkupack 2 zugewandte erste Platinenseite 31 kann ebenso zur Aufnahme elektronischer Bauelemente 34 dienen wie eine zweite Platinenseite 32, die dem Akkupack 2 abgewandt liegt. Im gezeigten Ausführungsbeispiel sind auf der zweiten Platinenseite 32 insbesondere die Steuereinheit 30 und ein oder mehrere elektronische Bauelemente 34 vorgesehen.

Die Kontakte 21, 22 und der Kommunikationskontakt 28 zur elektrischen Verbindung mit dem Akkupack 2 sind - wie Fig. 2 zeigt - auf der ersten Platinenseite 31 vorgesehen. Die Kontakte 21, 22 und der Kommunikationskontakt 28 liegen auf der ersten Seite 41, der Frontseite des Trägers 40. Der elektrische Betriebsschalter 10 ist auf der zweiten, dem Akkupack 2 abgewandten Platinenseite 32 der Platine 26 angeordnet. Der Betriebsschalter 10 liegt somit auf der zweiten Seite 42 des Trägers 40, auf einer sogenannten Rückseite des Trägers 40. Auf der zweiten Platinenseite 32 sind auch Flachkontakte 70 zum Anschluss des Elektromotors 5 vorgesehen.

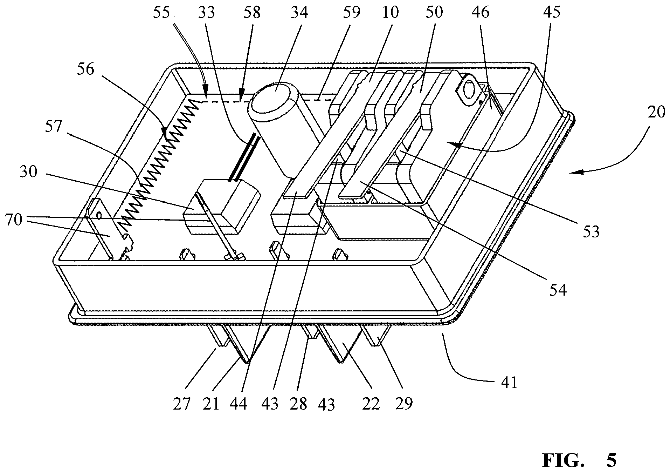

In Fig. 3 ist die Steuereinheit 30 auf der den Träger 40 bildenden Platine 26 vorgesehen. Es kann zweckmäßig sein, die Steuereinheit 30 auf einer Steuerungsplatine 35 anzuordnen, die eine weitere Platine bildet. Die Steuerungsplatine 35 wird auf der den Träger 40 bildenden Platine 26 fixiert und elektrisch mit dieser verbunden; zweckmäßig sind die den Träger 40 bildende Platine 26 und die Steuerungsplatine 35 auf einer gemeinsamen Platine angeordnet, wie die Figuren 3 und 5 zeigen.

Das Funktionsmodul 20 umfasst somit den Betriebsschalter 10 und die Steuereinheit 30 zur Inbetriebnahme des Elektromotors 5. Der Betriebsschalter 10 ist mit einem mechanischen Betätigungsglied 9 und/oder einem mechanischen Betätigungsglied 8 gekoppelt. Die Wirkverbindungen 11, 12 der Kopplung können als Zweihandschaltung ausgelegt werden, d. h., zur Inbetriebnahme des Elektromotors 5 müssen das Betätigungsglied 9 und das Betätigungsglied 8 niedergedrückt sein. Nur ein Niederdrücken beider Betätigungsglieder 8 und 9 führt zu einem Hub in Pfeilrichtung 51 (Fig. 1) und damit zu einem Einschalten des Betriebsschalters 10.

In Fig. 3 ist das Funktionsmodul 20 gezeigt, bei dem die elektrischen Kontakte 21, 22 und der Kommunikationskontakt 28 zusammen mit der Steuereinheit 30 und dem Betriebsschalter 10 an dem gemeinsamen Träger 40 gehalten sind. Der Träger 40 weist auf der ersten Seite 41 zumindest die elektrischen Kontakte 21, 22 und den Kommunikationskontakt 28 auf. Auf der zweiten Seite 42 des Trägers 40 ist zumindest der Betriebsschalter 10 vorgesehen.

Der Träger 40 ist durch die Platine 26 gebildet, wobei - vgl. Fig. 3 - die elektrischen Verbindungen zwischen den elektrischen Kontakten 21, 22, dem Kommunikationskontakt 28 und dem Betriebsschalter 10 sowie der Steuereinheit 30 als Leiterbahnen 33 auf der Platine 26 ausgebildet sind.

In Weiterbildung der Erfindung nach Fig. 5 weist das Funktionsmodul 20 neben dem Betriebsschalter 10 einen elektrischen Bremsschalter 50 auf, der auf der zweiten Seite 42 des Trägers 40 angeordnet ist. Bevorzugt liegen der Betriebsschalter 10 und der Bremsschalter 50 insbesondere eng benachbart nebeneinander. Zweckmäßig sind der Betriebsschalter 10 und der Bremsschalter 50 in einem gemeinsamen Montagefuß 46 gehalten.

Der Bremsschalter 50 ist einem Bremskreis 55 zugeordnet, der einen Bremswiderstand 56 umfasst. Der Bremswiderstand 56 ist im Ausführungsbeispiel als Leiterbahn 57 auf der Platine 26 ausgebildet. Auch die Leitungen 58 des elektrischen Bremskreises 55 sind vorteilhaft als Leiterbahnen 59 auf der Platine 26 integriert.

Wie Fig. 5 zeigt, ist der Betriebsschalter 10 und/oder der Bremsschalter 50 vorzugsweise als elektromechanischer Schalter, insbesondere als Mikroschalter 45 ausgebildet, wobei die mechanische Kopplung der Wirkverbindungen 11 und 12 der Betätigungsglieder 8 und 9 an den Schaltzungen 44, 54 angreifen. Eine Schaltzunge 44, 54 wirkt auf einen Betätigungsstift 43, 53. Die Schaltzungen 44, 54 sind vorzugsweise elastisch. Als Betriebsschalter 10 und/oder Bremsschalter 50 können auch berührungslose Schalter wie Reed-Kontakte, Hall-Sensoren oder dgl. Annäherungsschalter verwendet werden.

Die elektrischen Kontakte 21, 22 und der Kommunikationskontakt_28 zur Verbindung mit dem Akkupack 2 sind als lösbare Steckverbindungen 36 ausgebildet, wie Fig. 2 zeigt.

Die den Träger 40 bildende Platine 26 ist in einer Aufnahme 37 gehalten, die eine Art Aufnahmewanne bildet. Der Boden 38 der Aufnahme 37 wird von den elektrischen Kontakten 21, 22 und dem Kommunikationskontakt 28 durchragt. Die Platine 26 des Trägers 40 liegt mit einem Abstand 39 zum Boden 38. Bevorzugt ist die Gestaltung derart vorgesehen, dass die Platine 26 des Trägers 40 in der Aufnahme 37 vergossen ist. In Fig. 4 ist die Vergussmasse 48 zum Teil dargestellt.

## Patentansprüche

1. Handgeführtes Arbeitsgerät mit einem Akkupack (2) und einem Elektromotor (5) zum Antrieb eines Werkzeugs (4), mit elektrischen Kontakten (21, 22) zur elektrischen Verbindung mit dem Akkupack (2), und mit einem elektrischen Betriebsschalter (10) zur Inbetriebnahme des Elektromotors (5), wobei der Betriebsschalter (10) mit einem Betätigungsglied (8, 9) gekoppelt ist, sowie mit einer Steuereinheit (30) zum Betrieb des Elektromotors (5), wobei die elektrischen Kontakte (21, 22), die Steuereinheit (30) und der Betriebsschalter (10) an einem gemeinsamen Träger (40) gehalten sind,
**dadurch gekennzeichnet, dass** der Träger (40) eine dem Akkupack (2) zugewandte erste Seite (41) und zumindest eine dem Akkupack (10) abgewandte zweite Seite (42) aufweist, dass die elektrischen Kontakte (21, 22) auf der ersten Seite (41) des Trägers (40) als lösbare Steckverbindungen (36) zum unmittelbaren Aufstecken des Akkupacks (2) ausgebildet sind, und der Betriebsschalter (10) auf der zweiten Seite (42) des Trägers (40) gehalten ist.

2. Arbeitsgerät nach Anspruch 1,
**dadurch gekennzeichnet, dass** der Träger (40) von einer Platine (26) gebildet ist, dass die Platine (26) die Steuereinheit (30) trägt, und dass die elektrischen Verbindungen (11, 12) zwischen dem Akkupack (2), der Steuereinheit (30) und dem Betriebsschalter (10) als Leiterbahnen (33) auf der Platine (26) ausgebildet sind.

3. Arbeitsgerät nach Anspruch 2,
**dadurch gekennzeichnet,**
• **dass** die Platine (26) eine dem Akkupack (2) zugewandte erste Platinenseite (31) zur Aufnahme elektronischer Bauelemente (34) aufweist,
• **dass** die Platine (26) eine dem Akkupack (2) abgewandte zweite Platinenseite (32) zur Aufnahme elektronischer Bauelemente (24) aufweist,
• **dass** die Kontakte (21, 22) auf der ersten Platinenseite (31) angeordnet sind,
• und **dass** der Betriebsschalter (10) auf der zweiten Platinenseite (32) gehalten ist.

4. Arbeitsgerät nach Anspruch 2 oder 3,
**dadurch gekennzeichnet, dass** die Steuereinheit (30) auf einer Steuerungsplatine (35) als weitere Platine ausgebildet ist.

5. Arbeitsgerät nach einem der Ansprüche 1 bis 4,
**dadurch gekennzeichnet, dass** der Elektromotor (5) mit einem elektrischen Bremskreis (55) ausgebildet ist, der einen Bremswiderstand (56) und einen elektrischen Bremsschalter (50) umfasst.

6. Arbeitsgerät nach Anspruch 5,
**dadurch gekennzeichnet, dass** der Bremsschalter (50) auf der zweiten Seite (42) des Trägers (40) gehalten ist.

7. Arbeitsgerät nach Anspruch 5,
**dadurch gekennzeichnet, dass** der Bremswiderstand (56) als elektrisches Bauelement auf der Platine (29) des Trägers (40) ausgebildet ist.

8. Arbeitsgerät nach Anspruch 7,
**dadurch gekennzeichnet, dass** der Bremswiderstand (56) als Leiterbahn (57) auf zumindest einer Platinenseite (31, 32) der Platine (26) des Trägers (40) ausgebildet ist.

9. Arbeitsgerät nach Anspruch 7,
**dadurch gekennzeichnet, dass** die Leitungen des elektrischen Bremskreises (55) als Leiterbahnen (57,58) auf der Platine (29) des Trägers (40) ausgebildet sind.

10. Arbeitsgerät nach Anspruch 3,
**dadurch gekennzeichnet, dass** die Platine (26) in einer Aufnahme (37) gehalten ist und die Platine (26) in der Aufnahme (37) vergossen ist.

11. Arbeitsgerät nach Anspruch 10,
**dadurch gekennzeichnet, dass** die elektrischen Kontakte (21, 22) den Boden (38) der Aufnahme (37) durchragen.

12. Elektromechanisches Funktionsmodul (20) zur Inbetriebnahme eines Elektromotors (5) in einem akkubetriebenen, handgeführten Arbeitsgerät (1), mit elektrischen Kontakten (21, 22) zur elektrischen Verbindung mit einem Akkupack (2), wobei das Funktionsmodul (20) einen Betriebsschalter (10) und eine Steuereinheit (30) zur Inbetriebnahme des Elektromotors (5) umfasst, und der Betriebsschalter (10) mit einem mechanischen Betätigungsglied (8, 9) gekoppelt ist, wobei die Kontakte (21, 22), die Steuereinheit (30) und der Betriebsschalter (10) an einem gemeinsamen Träger (40) gehalten sind.
**dadurch gekennzeichnet, dass** die elektrischen Kontakte (21, 22) als lösbare Steckverbindungen (36) zum unmittelbaren Aufstecken des Akkupacks (2) ausgebildet sind wobei der Träger (40) eine die elektrischen Kontakte (21, 22) aufweisende erste Seite (41) und eine den Betriebsschalter (10) aufweisende zweite Seite (42) aufweist.

13. Funktionsmodul nach Anspruch 12,
**dadurch gekennzeichnet, dass** der Träger (40) von einer Platine (26) gebildet ist, dass die Platine (26) die Steuereinheit (30) trägt, und dass die elektrischen Verbindungen zwischen den elektrischen Kontakten (21, 22) und dem Betriebsschalter (10) als Leiterbahnen (33) auf der Platine (26) ausgebildet sind.

14. Funktionsmodul nach Anspruch 12,
**dadurch gekennzeichnet, dass** auf der den Betriebsschalter (10) aufweisenden zweiten Seite (42) des Trägers (40) ein elektrischer Bremsschalter (50) eines elektrischen Bremskreises (55) des Elektromotors (5) angeordnet ist.

15. Funktionsmodul nach Anspruch 13,
**dadurch gekennzeichnet, dass** auf der Platine (26) ein Bremswiderstand (56) eines elektrischen Bremskreises (55) des Elektromotors (5) angeordnet ist, der als Leiterbahn (57) auf der Platine (26) ausgebildet ist, und die Leitungen des elektrischen Bremskreises (55) als Leiterbahnen (58) auf der Platine (26) ausgebildet sind.

## Claims

1. Hand-guided working implement with a battery pack (2) and an electric motor (5) for driving a tool (4), with electric contacts (21, 22) for electric connection to the battery pack (2) and with an electric operating switch (10) for starting the electric motor (5), the operating switch (10) being coupled to an actuating element (8, 9), and with a control unit (30) for operating the electric motor (5), the electric contacts (21, 22), the control unit (30) and the operating switch (10) being held on a common carrier (40),
**characterised in that** the carrier (40) has a first side (41) facing the battery pack (2) and at least one second side (42) remote from the battery pack (2), **in that** the electric contacts (21, 22) are formed on the first side (41) of the carrier (40) as releasable plug connections (36) for the direct plugging-on of the battery pack (2), and **in that** the operating switch (10) is held on the second side (42) of the carrier (40).

2. Working implement according to claim 1,
**characterised in that** the carrier (40) is represented by a printed circuit board (26), **in that** the printed circuit board (26) carries the control unit (30) and **in that** the electric connections (21, 22) between the battery pack (2), the control unit (30) and the operating switch (10) are designed as conductors (33) on the printed circuit board (26).

3. Working implement according to claim 2,
**characterised in that**
• the printed circuit board (26) has a first circuit board side (31) facing the battery pack (2) for the accommodation of electronic components (34),
• the printed circuit board (26) has a second circuit board side (32) remote from the battery pack (2) for the accommodation of electronic components (24),
• the contacts (21, 22) are located on the first circuit board side (31)
• and the operating switch (10) is held on the second circuit board side (32).

4. Working implement according to claim 2 or 3,
**characterised in that** the control unit (30) is formed on a control circuit board (35) as a further printed circuit board.

5. Working implement according to any of claims 1 to 4,
**characterised in that** the electric motor (5) is designed with an electric braking circuit (55) comprising a braking resistor (56) and an electric braking controller (50).

6. Working implement according to claim 5,
**characterised in that** the braking controller (50) is held on the second side (42) of the carrier (40).

7. Working implement according to claim 5,
**characterised in that** the braking resistor (56) is formed as an electric component on the printed circuit board (29) of the carrier (40).

8. Working implement according to claim 7,
**characterised in that** the braking resistor (56) is designed as a conductor (57) on at least one circuit board side (31, 32) of the printed circuit board (26) of the carrier (40).

9. Working implement according to claim 7,
**characterised in that** the lines of the electric braking circuit (55) are designed as conductors (57, 58) on the printed circuit board (29) of the carrier (40).

10. Working implement according to claim 3,
**characterised in that** the printed circuit board (26) is held in a receptacle (37), and **in that** the printed circuit board (26) is potted in the receptacle (37).

11. Working implement according to claim 10,
**characterised in that** the electric contacts (21, 22) extend through the base (38) of the receptacle (37).

12. Electromechanical function module (20) for starting an electric motor (5) in a battery-operated hand-guided working implement (1), with electric contacts (21, 22) for electric connection to a battery pack (2), wherein the function module (20) comprises an operating switch (10) and a control unit (30) for starting the electric motor (5) and the operating switch (10) is coupled to a mechanical actuating element (8, 9), the contacts (21, 22), the control unit (30) and the operating switch (10) being held on a common carrier (40),
**characterised in that** the electric contacts (21, 22) are designed as releasable plug-in connections (36) for the direct plugging-on of the battery pack (2), wherein the carrier (40) has a first side (41) with the electric contacts (21, 22) and a second side (42) with the operating switch (10).

13. Function module according to claim 12,
**characterised in that** the carrier (40) is represented by a printed circuit board (26), **in that** the printed circuit board (26) carries the control unit (30) and **in that** the electric connections between the electric contacts (21, 22) and the operating switch (10) are designed as conductors (33) on the printed circuit board (26).

14. Function module according to claim 12,
**characterised in that** an electric braking controller (50) of an electric braking circuit (55) of the electric motor (5) is located on the second side (42) - having the operating switch (10) - of the carrier (40).

15. Function module according to claim 13,
**characterised in that** a braking resistor (56) of an electric braking circuit (55) of the electric motor (5) is located on the printed circuit board (26), which braking resistor (56) is designed as a conductor (57) on the printed circuit board (26), and **in that** the lines of the electric braking circuit (55) are designed as conductors (58) on the printed circuit board (26).

## Revendications

1. Appareil tenu à la main avec une batterie (2) et un moteur électrique (5) pour entraîner un outil (4), avec des contacts électriques (21, 22) pour le raccordement électrique à la batterie (2), et avec un interrupteur de service électrique (10) pour la mise en marche du moteur électrique (5), l'interrupteur de service (10) étant couplé à un organe d'actionnement (8, 9), et avec une unité de commande (30) pour le fonctionnement du moteur électrique (5), les contacts électriques (21, 22), l'unité de commande (30) et l'interrupteur de service (10) étant fixés à un support commun (40),
**caractérisé en ce que** le support (40) présente un premier côté (41) tourné vers la batterie (2), et au moins un deuxième côté (42) opposé à la batterie (10), **en ce que** les contacts électriques (21, 22) sont conçus sur le premier côté (41) du support (40) comme des connexions enfichables amovibles (36) pour le branchement direct de la batterie (2), et l'interrupteur de service (10) est fixé sur le deuxième côté (42) du support (40).

2. Appareil selon la revendication 1,
**caractérisé en ce que** le support (40) est formé par une platine (26), **en ce que** la platine (26) porte l'unité de commande (30), et **en ce que** les raccordements électriques (11, 12) entre la batterie (2), l'unité de commande (30) et l'interrupteur de service (10) sont conçus comme des pistes conductrices (33) sur la platine (26).

3. Appareil selon la revendication 2,
**caractérisé**
• **en ce que** la platine (26) présente un premier côté de platine (31), tourné vers la batterie (2), pour recevoir des composants électroniques (34),
• **en ce que** la platine (26) présente un deuxième côté de platine (32), opposé à la batterie (2), pour recevoir des composants électroniques (24),
• **en ce que** les contacts (21, 22) sont disposés sur le premier côté de platine (31),
• et **en ce que** l'interrupteur de service (10) est fixé sur le deuxième côté de platine.

4. Appareil selon la revendication 2 ou 3,
**caractérisé en ce que** l'unité de commande (30) est conçue sur une platine de commande (35) comme une platine supplémentaire.

5. Appareil selon l'une des revendications 1 à 4,
**caractérisé en ce que** le moteur électrique (5) est pourvu d'un circuit de frein électrique (55) qui comprend une résistance de frein (56) et un interrupteur de frein électrique (50).

6. Appareil selon la revendication 5,
**caractérisé en ce que** l'interrupteur de frein (50) est fixé sur le deuxième côté (42) du support (40).

7. Appareil selon la revendication 5,
**caractérisé en ce que** la résistance de frein (56) est conçue comme un composant électrique sur la platine (29) du support (40).

8. Appareil selon la revendication 7,
**caractérisé en ce que** la résistance de frein (56) est conçue comme une piste conductrice (57) sur au moins un côté (31, 32) de la platine (26) du support (40).

9. Appareil selon la revendication 7,
**caractérisé en ce que** les conducteurs du circuit de frein électrique (55) sont conçus comme des pistes conductrices (57, 58) sur la platine (29) du support (40).

10. Appareil selon la revendication 3,
**caractérisé en ce que** la platine (26) est fixée dans un logement (37), et elle est coulée dans le logement (37).

11. Appareil selon la revendication 10,
**caractérisé en ce que** les contacts électriques (21, 22) traversent le fond (38) du logement (37).

12. Module fonctionnel électromécanique (20) pour la mise en marche d'un moteur électrique (5) dans un appareil tenu à la main (1) fonctionnant sur batterie, avec des contacts électriques (21, 22) pour le raccordement électrique à une batterie (2), le module fonctionnel (20) comprenant un interrupteur de service (10) et une unité de commande (30) pour la mise en marche du moteur électrique (5), et l'interrupteur de service (10) étant couplé à un organe d'actionnement mécanique (8, 9), les contacts (21, 22), l'unité de commande (30) et l'interrupteur de service (10) étant fixés à un support commun (40).

13. Module fonctionnel selon la revendication 12,
**caractérisé en ce que** le support (40) est formé par une platine (26), **en ce que** la platine (26) porte l'unité de commande (30), et **en ce que** les raccordements électriques entre les contacts électriques (21, 22) et l'interrupteur de service (10) sont conçus comme des pistes conductrices (33) sur la platine (26), **caractérisé en ce que** les contacts électriques (21, 22) sont conçus comme des connexions enfichables amovibles (36) pour le branchement direct de la batterie (2), le support (40) présentant un premier côté (41) qui comporte les contacts électriques (21, 22), et un deuxième côté (42) qui comporte l'interrupteur de service (10).

14. Module fonctionnel selon la revendication 12,
**caractérisé en ce qu'**il est prévu sur le deuxième côté (42) du support (40) qui comporte l'interrupteur de service (10) un interrupteur de frein électrique (50) d'un circuit de frein électrique (55) du moteur électrique (5).

15. Module fonctionnel selon la revendication 13,
**caractérisé en ce qu'**il est prévu sur la platine (26) une résistance de frein (56) d'un circuit de frein électrique (55) du moteur électrique (5), qui est conçue comme une piste conductrice (57) sur la platine (26), et les conducteurs du circuit de frein électrique (55) sont conçus comme des pistes conductrices (58) sur la platine (26).
